# NEW EUROPEAN PATENT SPECIFICATION

(11) **EP 0 092 763 B2**
(45) Date of publication and mention of the opposition decision: **29.09.1993**
(45) Mention of the grant of the patent: 14.03.1990
(21) Application number: 83103727.0
(22) Date of filing: 18.04.1983
(51) Int. Cl.: G06K 1/12

(54) **Magnetic write device**
Magnetische Schreibeinrichtung
Dispositif d'écriture magnétique

(30) Priority: 22.04.1982 JP 66255/82
(43) Date of publication of application: 02.11.1983
(73) Proprietor: KABUSHIKI KAISHA TOSHIBA, Kawasaki-shi, Kanagawa-ken 210 (JP)
(72) Inventor: Kobayashi, Takashi, Totsuka-ku Yokohama-shi (JP); Otsubo, Yorihumi, Kohoku-ku Yokohama-shi (JP); Kobayashi, Kazuo, Ichikawa-shi Chiba-ken (JP); Kimata, Shigeki, Hodogaya-ku Yokohama-shi (JP)
(74) Representative: Henkel, Feiler, Hänzel & Partner

(56) References cited:
- GB-A- 1 212 502
- US-A- 3 790 754
- US-A- 3 803 634
- US-A- 3 941 977
- IBM TECHNICAL DISCLOSURE BULLETIN, vol. 7, no. 6, November 1964, page 500, Yorktown Heights, US; R.E. BRAUN: "Scanned recording by utilizing the coercivity characteristics of a recording media"
- Dokter, Steinhauer, "Digitale Elektronik in der Messtechnik und Datenverarbeitung", vol. 1, 3rd edition, Philips Fachbücher 1972, pp.17-21

## Description

The present invention relates to a magnetic write device which is provided in a ticket vending machine or ticket checking apparatus used in traffic facilities such as railway stations, airports, etc., or an automatic transaction apparatus used in banking facilities to write magnetic information.

Magnetic cards have heretofore been widely used as data input media in automatized equipment such as an automatic ticket checking apparatus or automatic cash dispensing machine or in terminal devices for computers. The magnetic card is formed by coating a base medium, such as a polyesterfilm, with y-Fe203. Oxides such as y-Fe203 and metal powder, or thin metal film which is formed of a composition such as Fe-Co-Ni, have been employed as the magnetic material. Magnetic characteristics such as saturation flux density, coercive force and rectangular ratio become important factors of the magnetic material. The conventional magnetic card has employed a magnetic material which had 1.25 to 1.40 max- wells/centimeter of residual flux density, 300 to 600 Oersted of coercive force, and a rectangular ratio larger than 0.7. It is necessary to consider problems such as demagnetization or a reduction in magnetization when employing such a magnetic card. Particularly in an automatic cash dispensing machine, it is extremely important to solve these problems since the card may be used in place of one's bankbook to carry out a va- rity of banking transactions.

The reduction in the magnetization or the demagnetization of the magnetic recording information may be caused by an external magnetic field, such as those generated from speakers of televisions and sterophonic players, electric products such as refrigerators, magnets for toys, or magnets of locks for handbags. Particularly when the conventional magnetic recording medium is in direct contact with a magnet of a toy or the lock of a handbag, the magnetic recording information of the medium can be almost completely demagnetized. Normally, a magnet for a toy or a lock has a DC magnetic field of 500 Oe to 1,000 Oe. When such a DC magnetic field directly contacts a magnetic card which has approx. 600 Oe of coercive force, the magnetic recording information of the card is almost completely demagnetized. In order to avoid such a difficulty, a magnetic recording medium which has a high coercive force such as 2,000 Oe to 3,000 Oe and which is affected very little by the influence of an external magnetic field is used. However, a magnetic recording medium which has such a high coercive force necessitates the application of a high magnetic field at the time of recording information. Further, a magnetic card with a high coercive force becomes expensive. On the other hand, in a conventional automatic ticket checking system used in train stations, magnetic recording media, each of which has a relatively low coercive force such as 300 Oe, are used. It is not necessary to apply a high magnetic field to such media of low coercive force, and when such a high magnetic field is applied to these media, the output level of the recording information of the media is decreased. Even if a magnetic field adapted for the media of low coercive force is applied to the media of high coercive force, its residual flux density is small, and the signal level of the recording information becomes low.

A ticket which is used for a long period of time such as a pass, a commutation, or season ticket has a possibility of being frequently affected by a strong external magnetic field during such long term use. Accordingly, it is desirable to employ magnetic recording media of high coercive force. However, media of low coercive force are widely used at present, and it would be quite difficult under the present circumstances to introduce magnetic read-write devices using media of high coercive force.

Prior art document US-A-3790754 describes a security access medium and a security system utilizing the security access medium which is adapted to prevent fraudulent re-production of the medium bearing member. This security access medium comprises a secure substance which has a plurality of paramagnetic materials having different levels of coerivity. Variable amounts of two magnetic oxide material may be determined as the result of printing from a rotary ink bearing member in two passes. Each of the two magnetic oxide materials, being hard and soft respectively, require different ampere turns to reverse its magnetic state or field. Measurement is accomplished by magnetizing the two magnetic oxide materials from an initial standard level of a latent state to a second standard level of an active state by writing with a first polarity and a first predetermined level of current. Then, a value is calculated by reading what has been written, and this value is entered into the system. A magnetization current of a second predetermined level is subsequently applied to enable reading of a signal at a second level, and the second level signal is read and a second value determined and recorded in the system. The first and second values are compared with a record to determine whether each value is within prescribed limits of the random values and they are compared with each other. These determinations are recorded either on a data track or at the store of another part of the system and compared in the logic system in which the card is used.

Further, prior art document "IBM Technical Disclosure Bulletin", Vol. 7, No. 6, November 1964, page 500 shows an arrangement in which a tape has a layer of magnetic material having varying coercivity characteristics across its face. At one side, the material has high coercivity characteristics and, at the opposite side, low coercivity characteristics. These characteristics can change in step fashion or in a linear manner across the tape. To write information on this tape, the write current supplied to a coil is required to be greater in amplitude at the side of the tape having the high coercivity characteristics than at the side having the low coercivity characeristics.

Similarly prior art document GB-A-1 212 502 describes an authenticity card having a layer of magnetic material of one coercivity occupying at least part of the area of this card and another layer of magnetic material of a different coercivity occupying part only of the area of the other layer, and an authenticity signal is recorded on the card magnetically in such a way as to produce a corresponding magnetic condition in both layers.

Finally, prior art document Dokter, Steinhauer, "Digitale Elektronik in der Messtechnik und Datenver- arbeitung', Volume 1, 3rd edition, Philips Fachbucher 1972, pages 17-21, teaches coding of a quantity M of information elements by means of a quantity M of information elements by means of a quantity m which is smaller than the quantity M, and representation of symbols by magnetization states.

It is an object of the present invention to provide a magnetic write device which is capable of reading and writing information on magnetic recording media having different coercive forces.

The present invention provides a magnetic write device as defined in claim 1.

This invention can be more fully understood from the following detailed description when taken in conjunction with the accompanying drawings, in which:
Fig. 1 is a schematic view of a traffic system which employs a magnetic write device of an embodiment according to the present invention;
Fig. 2 is a view showing an encode format of a one-way ticket;
Fig. 3 is a view showing an encode format of a multiple trip ticket;
Fig. 4 is a view showing an encode format of a pass;
Figs. 5 to 12 are views respectively showing a variety of information write circuits used for a magnetic write device;
Fig. 13 is a schematic structural view of a ticket checking apparatus having a magnetic write device of an embodiment according to the present invention;
Fig. 14 is a block diagram of a data processing section of a ticket checking apparatus shown in Fig. 13;
Fig. 15 is a plan view of an information write head and a ticket and pass;
Fig. 16 is a schematic structural view of a ticket checking apparatus of another embodiment;
Fig. 17 is a plan view showing the relationship between the size detector and the ticket and pass shown in Fig. 16;
Fig. 18 is a block diagram of another data processing section used for a ticket checking apparatus; and
Fig. 19 is a graphic view showing the relationship between the coercive force and the read output.

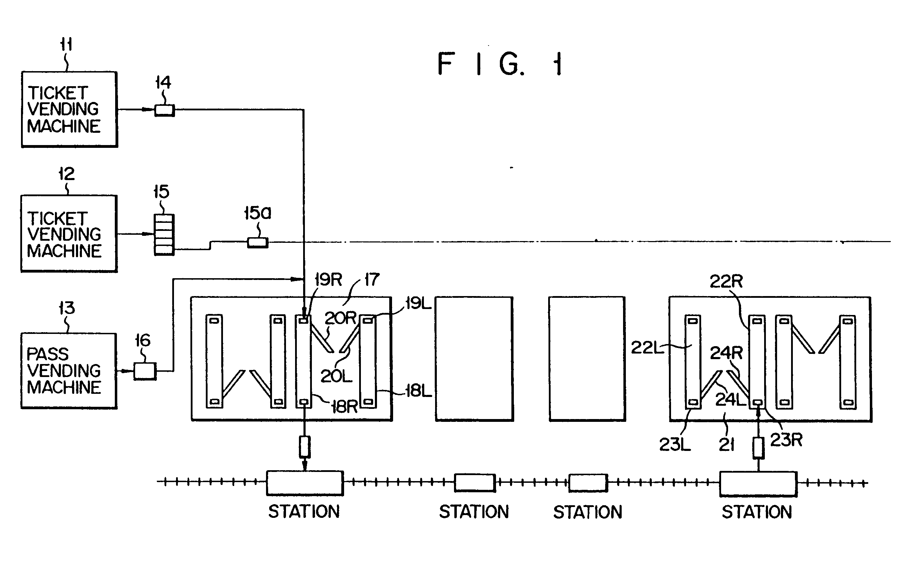

Fig. 1 schematically shows a traffic system. In this system, a one-way ticket vending machine 11, a multiple trip ticket vending machine 12 and a pass vending machine 13 are installed in a station. These vending machines 11, 12 and 13 automatically sell a one-way ticket 14, a multiple trip ticket 15 and a pass 16, respectively. A magnetic layer coated with a magnetic material is formed on the back surface of each of the tickets 14 and 15, and the pass 16. Various pieces of information are recorded in the magnetic layers of the tickets 14 and 15, and the pass 16 in accordance with the encode formats of Japanese Cybernetics Committee standards. When either the one-way ticket 14, multiple trip ticket 15a or pass 16 is inserted into one of the inlet slots 19R and 19L of the- side structures 18Rand 18Lof an automatic gate 17, the ticket 14 or 15a or the pass 16 is checked by an automatic ticket checking apparatus provided in the side structures 18Rand 18L. If the ticket 14 or 15a or the pass 16 is proper, gate bars 20R, 20L are opened, and passengers can pass the gate 17.

At an arrival station, when the ticket 14 or 15a or the pass 16 is inserted, for example, into one of the slots 23R and 23L of the side structures 22R and 22L of an exit automatic gate 21, it is checked by the automatic ticket checking apparatus of the side structure 22R, and, if it is correct, gate bars 24R and 24L are opened.

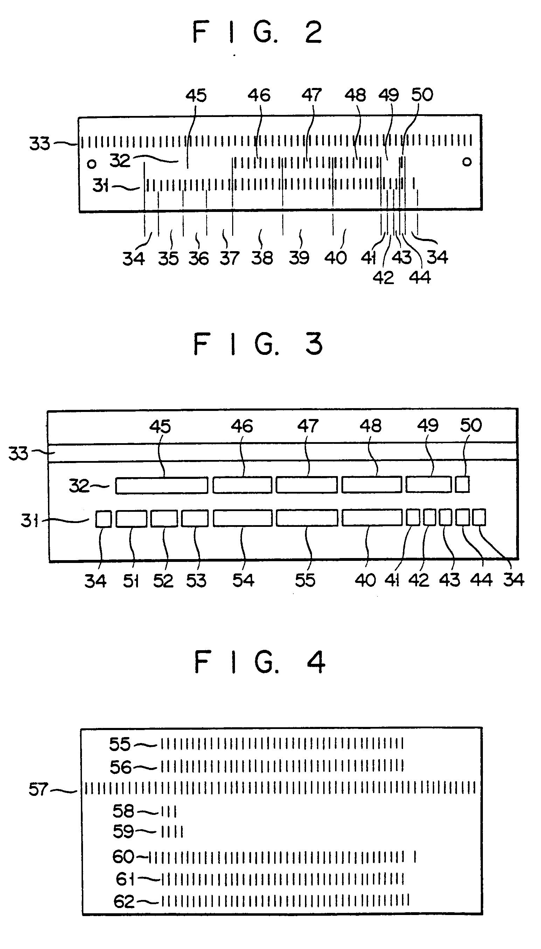

As respectively shown in Figs. 2, 3 and 4, information is stored in an encoded format in the tickets 14 and 15a and pass 16 used in the above traffic system. In other words, according to the one-way ticket 14 in Fig. 2, first track 31, second track 32 and clock track 33 are formed in the region of the magnetic layer of a rectangle approx. 30 mmx57 mm. Line information, which includes ticket direction discrimination data 34, month data 35, tens place date data 36, ones place date data 37, division data 38, station sequence data 39, section (fare) data 40, a communication bit 41, a ticket type bit 42, a spare bit 43 and a parity bit 44 provided at both ends is stored in the first track 31. Another company's line information, which includes a blank bit 45, division data 46, station sequence data 47, section (fare) data 48, a blank bit 49 and a parity bit 50 is stored in the second track 32.

On a multiple trip ticket shown in Fig. 3 first and second tracks 31, 32 and clock track 33 are provided, as in the one-way ticket. The same information is stored in the second track 32 and the clock track 33 as in the one-way ticket in Fig. 2. However, instead of the month data 35, tens place date data 36, ones place date data 37, division data 38 and station sequence data 39 of the one-way ticket, the first track of the multiple trip ticket stores an effective end month data 51, tens place effective end date data 52, ones place effective end date data 53, a multiple trip ticket code (coded data for identifying a specific division code as the multiple trip ticket code or part thereof) 54, and multiple trip ticket type data (coded data for indentify- ing the issuing year of the multiple trip ticket in accordance with station sequence data which is altered every year) 55. On the front surface of the multiple trip ticket ticket fare (section) data is printed.

According to the encode format of the pass shown in Fig. 4, eight magnetic tracks from the first track 55 to the eighth track 62 are provided in the magnetic layer of 57 mmx85 mm. The first, second, sixth, seventh and eighth tracks are data tracks which record the discrimation data, and the third track 57 is a clock track. The fourth and fifth tracks 58 and 59 are tracks to be written by an automatic ticket checking apparatus. These tracks 58 and 59 store error occurrence numbers in case a reading error occurs when information is read from the pass by the automatic ticket checking apparatus. When the number of reading errors exceeds a predetermined number, the pass is considered an information breakdown ticket.

Both high and low coercive force operations are generally provided in the ticket and pass vending machines 11, 12 and 13, which can issue either a high or low coercive force ticket or pass. In other words, both the ticket and pass have low and high coercive forces. According to the present invention, a high and low coercive force vending machine is further employed. The low coercive force vending machine is widely used for vending tickets and passes. The high coercive force vending machine is modified, and is used for issuing a long-term use ticket, i.e., passes and multiple trip tickets. The high and low coercive force vending machine is constructed to issue, for example, one-way tickets with low coercive force magnetic media and to issue multiple trip tickets or passes with high coercive force magnetic media. The write section of the high and low coercive force vending machine is constructed, for example, as shown in Fig.

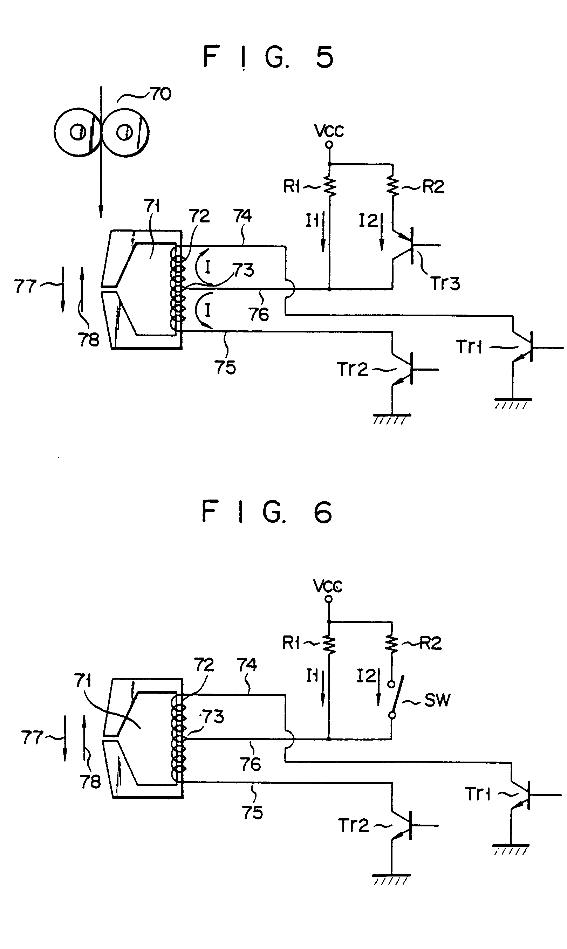

5. In Fig. 5, an exciting coil 72 which has a center tap 73 is wound on a write magnetic head 71. Lead wires 74 and 74 of both ends of the coil 72 are respectively grounded through the collector-emitter paths of transistors Tr1 and Tr2. A lead wire 76 of the tap 73 is connected through a resistor R1 to a power source voltage Vcc, and is connected in series through the collector-emitter path of a transistor Tr3 and a resistor R2 to the power voltage Vcc.

In the circuit in Fig. 5, when a low coercive force ticket such as one-way ticket 14 is issued from the vending machine, a low level signal is inputted to the transistor Tr3, which is, in turn, turned OFF. In this state, high and low level signals are selectively supplied to the bases of the transistors Tr1 and Tr2 according to a write signal. When the high level signal is, for exmaple, supplied to the base of the transistor Tr1 and the low level signal is supplied to the transistor Tr2, the transistors Tr1 and Tr2 are respectively turned "ON" and "OFF". Thus, a current 11 flows to the coil 72 through the resistor R1, a lead line 76, the coil 72, a lead line 74 and the transistor Tr1. In this manner, a weak recording magnetic field 77 is induced in the head 71, thereby recording information on the ticket 14 transported to the head 71 by a transportation system 70. When the transistor Tr1 is OFF and the transistor Tr2 is ON, the head 71 generates a recording magnetic field 78 of reverse polarity to a recording magnetic field 77, thereby recording the information on the ticket 14 with the weak magnetic field.

Then, when the vending machine issues a ticket of high coercive force, a high level signal is supplied to the base of the transistor Tr3, which turns it ON. When the transistors Tr1 and Tr2 are both turned OFF at the tap 73 in response to the recording information in this state, a current 11 +12 flows through the coil 72, the line 74 and the collector emitter path of the transistor Tr1. In this case, the head 71 generates a recording magnetic field stronger than that used when recording the information on a one-way ticket.

In the circuit in Fig. 6, the transistor Tr3 in Fig. 5 is replaced by a switch SW. This switch SW is switched on in response to the issue of a one-way ticket or pass. In other words, when a ticket is recorded with a weak magnetic field, namely, a low coercive force recording mode, the switch SW is opened, while in case of issuing a pass, i.e., when recording the ticket with a strong magmetic field (high coercive force recording mode), the switch SW is closed. The operation of the circuit in Fig. 6 is the same as that of the circuit in Fig. 5.

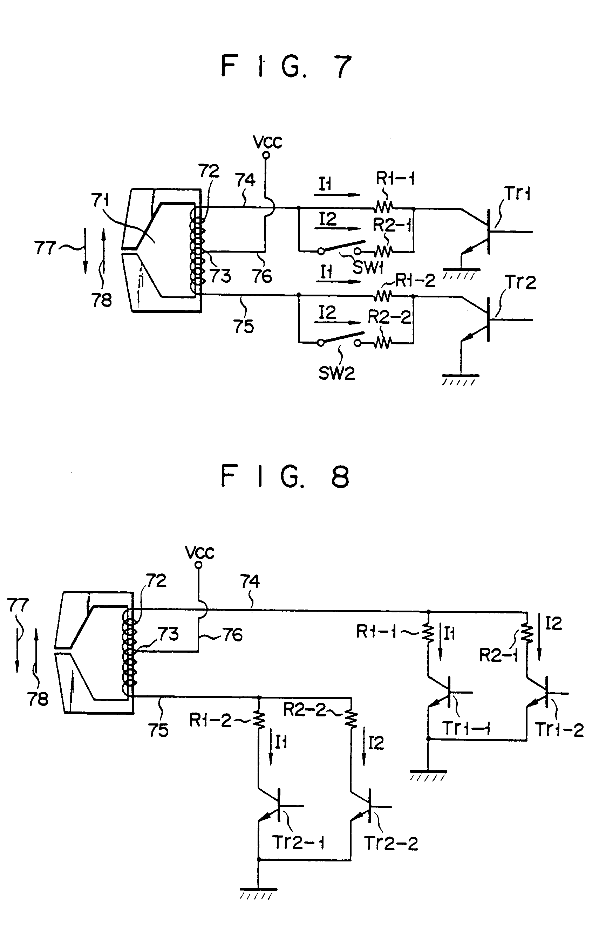

In a write circuit in Fig. 7, a center tap 73 of an exciting coil 72 is connected through a lead line 76 to a power source voltage Vcc. A lead line 74 connected to one end of the coil 72 is connected through a resistor R1-1 to the collector of a transistor Tr1 and is connected in series through a switch SW1 and a re- sistorR2-1 to the collector of the transistor Tr1. A lead line 75 connected to the other end of the coil 72 is connected to the collector of a transistor Tr2 and is connected in series through a switch SW2 and a resistor R2-2 to the collector of the transistor Tr2.

According to the write circuit in Fig. 7, the switches SW1 and SW2 are respectively opened and closed according to the low or high coercive force recording mode, and the transistors Tr1 and Tr2 are turned ON or OFF according to the recording information, thereby recording in the low or high coercive force recording mode. In other words, when the switches SW1 and SW2 are opened, the coil 72 is excited only by the current 11, and information recording is performed with a weak magnetic field by the recording magnetic field on the recording medium, i.e., the magnetic layer of the one-way ticket. When the switches SW1 and SW2 are closed, the exciting current 11+12 flows through the coil 72, and the information is recorded on the recording medium of the pass using the strong magnetic field.

In a write circuit in Fig. 8, a lead line 74 is grounded in parallel through a series circuit of a resistor R1-1 and a transistor Tr1-1 and a series circuit of a resistor R2-1 and a transistor Tr1-2. Similarly, a lead line 75 is grounded in parallel through a series circuit of a resistor R1-2 and a transistor Tr2-1 and a series circuit of a resistor R2-2 and a transistor Tr2-2.

According to this circuit, a signal corresponding to recording information is supplied to the bases of the transistors Tr1-1 and Tr2-1, and a switching signal responsive to low or high coercive force recording mode is supplied to the bases of the transistors Tr1-2 and Tr2-2. In other words, the transistors Tr1-2 and Tr2-2 are turned OFF in the low coercive force recording mode, the coil 72 is excited by the current 11, and information is recorded on the recording medium with the weak magentic field. The transistors Tr1-2 or Tr2-2 is turned ON in the high coercive force recording mode, and the coil 72 is excited by the current 11+12. In this manner, the magnetic head records information on the recording medium using the strong magnetic field.

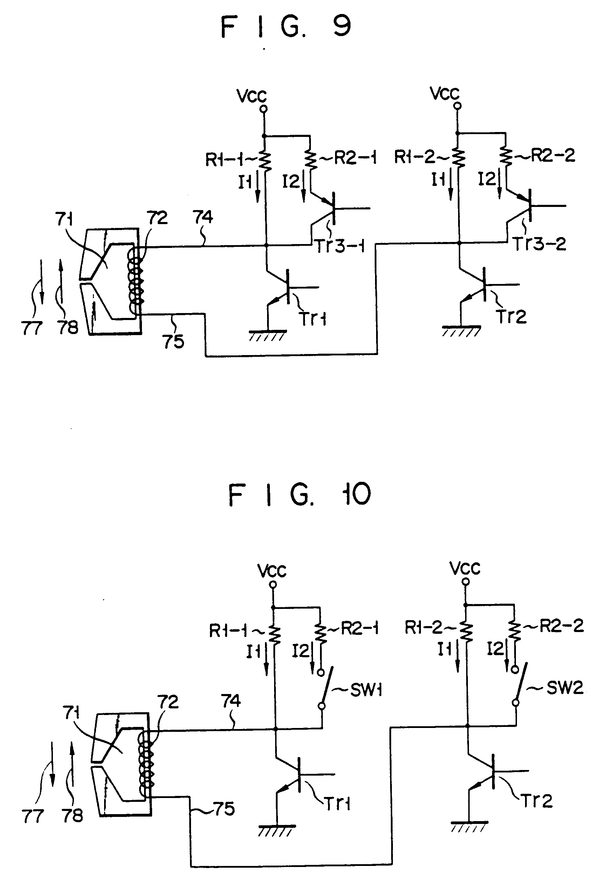

In a write circuit in Fig. 9, a center tap is not provided at an exciting coil 72, a lead line 74 connected to one end of the coil 72 is connected through a resistor R1-1 to a power voltage Vcc, and is connected through the collector-emitter path of a transistor Tr3-1 and a resistor R2-1 to a power voltage Vcc. Further, a lead line 74 is grounded through the collector-emitter path of a transistor Tr1. The power voltage Vcc is connected through a resistor R1-2 to a lead line 75 connected to the other end of the coil 72 and is connected through a resistor R2-2 and the emitter-collector path of a transistor Tr3-2. The line 75 is grounded through the collector-emitter path of a transistor Tr2.

According to the circuit in Fig. 9, a recording signal is supplied to the bases of the transistors Tr1 and Tr2. A low or high coercive force recording mode signal is supplied to the bases of the transistors Tr3-1 and Tr3-2. In other words, the transistors Tr3-1 and Tr3-2 are turned OFF in the low coercive force recording mode, and the coil 72 is excited by the current 11. The transistors Tr3-1 and Tr3-2 are turned ON in the high coercive force recording mode, the coil 72 is excited by the current 11+12, and information is recorded on a recording medium with a high coercive force.

In a write circuit in Fig. 10, switches SW1 and SW2 are provided instead of the transistors Tr3-1 and Tr3-2 of the circuit in Fig. 9, and the remainder of the circuit arrangement is the same as the circuit in Fig. 9.

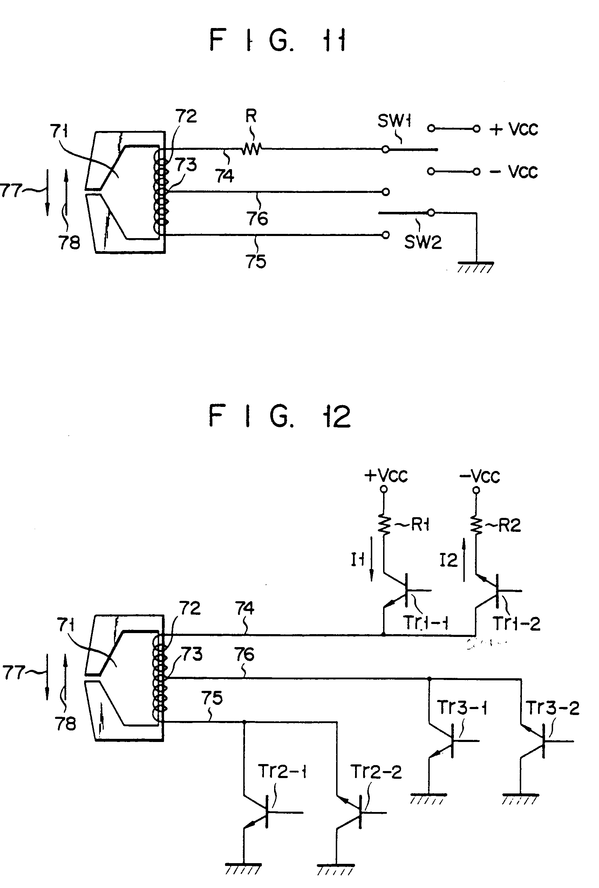

In a write circuit in Fig. 11, a lead line 74 connected to one end of an exciting coil 72 is connected through a resistor R to a common contact of a changeover switch SW1, and the first and second contacts of this switch SW1 are respectively connected to power voltages +Vcc and -Vcc. A centre tap 73 and the other end of an exciting coil 72 are respectively connected through lead lines 76 and 75 to the first and second contacts of a changeover switch SW2. The common contact of the switch SW2 is grounded.

A transistorized circuit of the circuit in Fig. 11 is shown in Fig. 12. In the circuit in Fig. 12, a power voltage +Vcc is connected through a resistor R1 and a transistorTr1-1 to a lead line 74, and a power voltage -Vcc is connected through a resistor R2 and a tran- sistorTr1-2. Alead line 75 connected to the other end of the coil 72 is grounded through a transistor Tr2-1 and Tr2-2. A lead line 76 connected to a center tap 73 is grounded through complementary transistors Tr3-1 and Tr3-2.

According to the write circuit in Fig. 12, the transistors Tr1-1, Tr3-1 and Tr2-1 are selectively turned ON or OFF. In this case, the transistors Tr1-2, Tr3-2 and Tr2-2 are turned OFF. In other words, the transistors Tr1-1 and Tr3-1 are turned ON and the transistor Tr2-1 is turned OFF, in the low coercive force recording mode. At this time, a current 11 flows from the power voltage +Vcc through a resistor R1, transistor Tr1-1, coil 72, tap 73, line 76 and transistor Tr3-1. Accordingly, information is recorded on a recording medium with low coercive force. When the transistor Tr3-1 is turned OFF and the transistor Tr2-1 is turned ON, the current 11 flows through resistor R1, transistor Tr1-1, line 74, coil 72, line 75 and transistor Tr2-1. In other words, the current 11 flows through all the coil sections of the exciting coil 72, a strong recording magnetic field 77 is generated from a magnetic head 71, and information is recorded on the recording medium with high coercive force.

On the other hand, when the transistors Tr1-1, Tr3-1 and Tr2-1 are turned OFF and the transistors Tr1-2 and Tr3-2 are turned ON, a current 12 flows through transistor Tr3-2, line 76, tap 73, coil 72, line 74, transistor Tr1-2 and resistor R2. At this time, the recording medium is magnetized by a magnetic field 78 of low intensity, and information is recorded on the recording medium with low coercive force. When the transistor Tr3-1 is turned OFF and the transistor Tr2-1 is turned ON, a recording magnetic field 78 of high density is generated from the magnetic head 71, thereby magnetizing the recording medium and recording the information with high coercive force.

As described above, when the low or high coercive force recording mode is selectively set according to the ticket or pass, predetermined information is recorded on the magnetic layer (recording medium) of a one-way ticket, multiple trip ticket or pass.

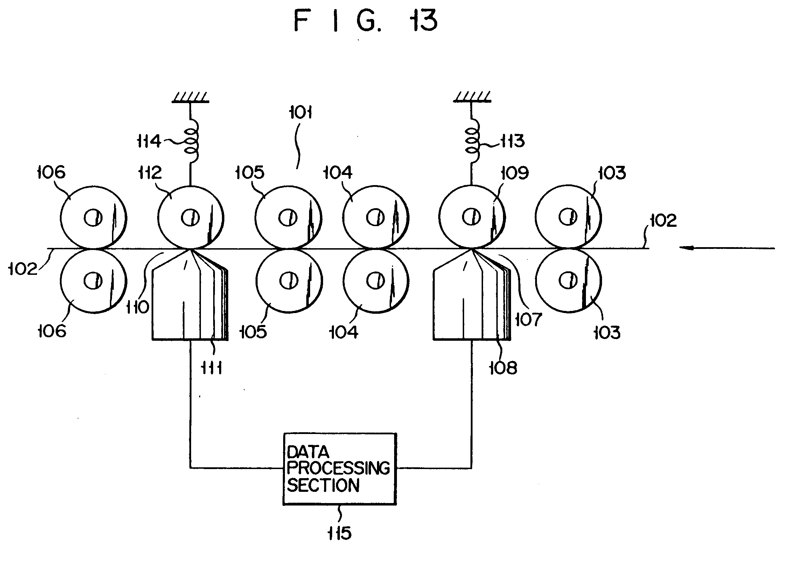

When the one-way ticket, multiple trip ticket or pass thus recorded with the information as described above is inserted into the inlet slot 19R or 19L of the automatic gate 17, the ticket or pass is checked by the automatic ticket checking apparatus. The ticket checking apparatus is constructed as shown in Fig. 13. In other words, a ticket/pass transporting device 101 has rollers 103,104,105 and 106 arranged along a transport path 102. A magnetic read device 107 is arranged between the rollers 103 and 104. The device 107 has a magnetic read head 108 and a press roller 109 in contact opposite to each other. A magnetic write device 110 is arranged between the rollers 105 and 106. The device 110 has a magnetic write head 111 and a press roller 112 in contact opposite to each other. The rollers 109 and 112 are respectively urged towards the heads 109 and 111 by press springs 113 and 114.

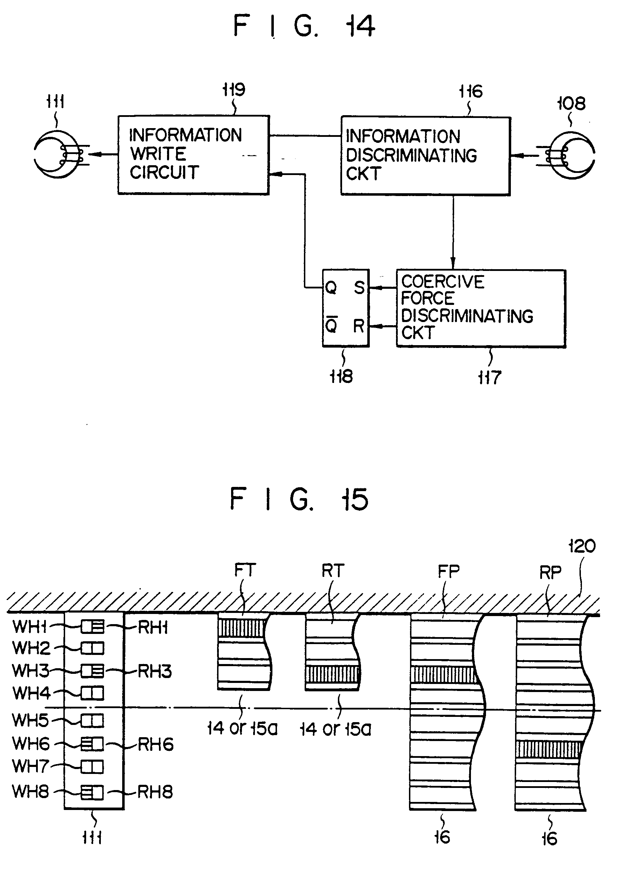

The output of the head 108 and the input of the head 111 are connected to a data processing section 115. This section 115 has, as shown in Fig. 14, an information discriminating circuit 116 including an input connected to the output of the head 108 and a coercive force discriminating circuit 117. The circuit 116 is constructed to discriminate, for example, the propriety of the information of the pass read by the head 108 by an ordinary method. The output of the circuit 117 is connected to the input of a flip-flop 118. The output of the flip-flop 118 is connected to the input of an information write circuit 119 together with the output of the circuit 116. The circuit 119 is provided in a ticket vending machine and has a circuit arrangement similar to the information write circuit shown in Figs. 5 to 12. For example, in the write circuit in Fig. 5, the output Q of the flip-flop 118 is supplied to the base of the transistor Tr3, and read information is supplied through the circuit 116 to the transistors Tr1 and Tr2. The output of the circuit 119 is connected to a magnetic head 111 corresponding to the head 71 in Fig. 5.

When the pass 16 is introduced between the rollers 103 through the transport path 102 into the above described automatic ticket checking apparatus, the ticket 14 or pass 16 is conveyed by the rollers 103 to the read device 109. The head 108 of the device 109 has eight magnetic head elements provided corresponding to the eight tracks 55 to 62 formed on the pass in Fig. 4, and the information on the pass 16 is read by the eight elements. Since the ticket 14 or 15a has only 3 tracks as shown in Figs. 3 and 4, the information of the ticket 14 or pass 15a is read by the three elements of one side of the eight elements.

The information read by the head 108 is inputted to the circuit 116, which transfers the coercive force data of the input information into the circuit 117. In the case of the one-way ticket, the coercive force data may be substituted for the ticket type bit 42 in Fig. 2 ormay use the spare bit43. In the case of the multiple trip ticket, the multiple trip ticket code 54 is used as the coercive force data, and in the case of the pass, the coercive force data is stored in any of the data tracks 55, 56, 60, 61 and 62.

The circuit 117 discriminates whether the inputted coercive force data is high or low, and supplies a set signal or reset signal to the flip-flop 118 according to the discriminated result. When the coercive force data represents, for example, the high coercive force with "1" and the low coercive force with "0", the circuit 117 outputs the set signal with the data "1" and the reset signal with the data "0". When the flip-flop 118 supplies, when set, an output Q to the circuit 119, the transistor Tr3 of the write circuit in Fig. 5 is turned ON, and the circuit 119 is set to the high coercive force recording mode. When the flip-flop 118 is reset, the transistor Tr3 is turned OFF, and the circuit 119 is set to the low coercive force recording mode.

On the other hand, the circuit 116 discriminates the information of the ticket 14 or 15a or pass 16. In other words, the circuit 116 discriminates, for example, the effective section or effective term. When the circuit 116 discriminates the proper data, it supplies, for example, a gate open signal to a gate driving device (not shown). When an error exists in the data of the pass 16 in this discriminating operation, the circuit 116 generates number-of-errors data. The ticket or pass is conveyed by the rollers 104 and 105 through the device 107 to the device 110. As shown in Fig. 15, the ticket 14 or 15a or pass 16 is conveyed along a guide surface 120 to the device 110, but since the ticket or pass is inserted in an arbitary direction into the ticket checking apparatus, the ticket or pass may be conveyed in either the normal or reverse directions, as shown by FT, RT, FP and RP in Fig. 15. The write head 111 has eight write head elements WH1 to WH8, and four read head elements RH1, RH3, RH6 and RH8 for reading a clock. When the ticket 14 or 15a or pass 16 is conveyed in the normal direction to the head 111, the clock track of the ticket 14 or 15a and pass 16 are respectively read by the read head elements RH1 and RH3, and, in the reverse direction, the tracks of the ticket 14 or 15a and pass 16 are respectively read by the elements RH3 and RH6. This normal or reverse direction is discriminated by the circuit 119 based on the directional data stored on the track of the ticket 14 or 15 and pass 16. The circuit 119 writes ticket or pass information transferred from the circuit 116 on the ticket or pass synchronously with the clock of the clock track. In this case, the normal direction ticket FT is written by the elements WH2 and WH3, and the reverse direction ticket RT is written by the elements WH1 and WH2. Similarly, the normal direction pass FP is written by the elements WH1 and WH2, and WH5 to WH8, and the reverse direction pass PR is written by the elements WH1 to WH5 and WH7 and WH8.

Write information is ticket or pass information which is discriminated by the circuit 116 and update data, and when such information is supplied, for example, to the bases of the transistors Tr1 and Tr2 of the circuit 119 in Fig. 5, the information of the ticket or pass is all rewritten.

The elements WH1 to WH3, RH1 and RH3 of the head 111 slidably contact the ticket 14 or 15a or pass 16, but the elements WH4 to WHB, and RH6 and RH8 slidably contact only the pass 16. Accordingly, the elements WH1 to WH3 and RH1 and RH3 are worn more than the elements WH4 to WH8 and RH6. In order to compensate this, the head elements are symmetically arranged about a centre (shown by a one-dotted chain line) in the write head 111, and the write head 111 is constructed so that, when the head 111 is worn irregularly at one side, it may be turned at 180° around the (one-dotted chain line) center. In this manner, one-side wear of the head can be corrected, and the lifetime of the head can be substantially prolonged. This can also be applied to the read head 108.

In the embodiments described above, description has been given using the one-way ticket 14 as a low coercive force ticket and the multiple trip ticket 15 and pass 16 as a high coercive force ticket. However, the low and high coercive force passes may be used. When the high coercive force pass is used, the pass is not reduced in magnetization nor demagnetized by the external magnetic field. Accordingly, if almost no error occurs in reading the high coercive force pass, it is not necessary to record data of the number of reading errors. Consequently, only information on the pass size needs to be written for the low coercive force magnetic layer. On the other hand, in the case of the ticket 14 or 15, when the multiple trip ticket 15a is determined to be effective by the circuit 116, the effective end month data 51, tens place effective end date data 52, ones place effective end date data 53, mulitiple trip ticket code 54 and ticket type data 55 of the mulitple trip ticket 15a must be rewritten to correspond to the data 62 to 66 of the one-way ticket 14. Therefore, in the case of the ticket size, the information may be written only for the high coercive force ticket. From this, the write circuit may be set to either the high or low coercive force recording mode by discriminating the ticket size.

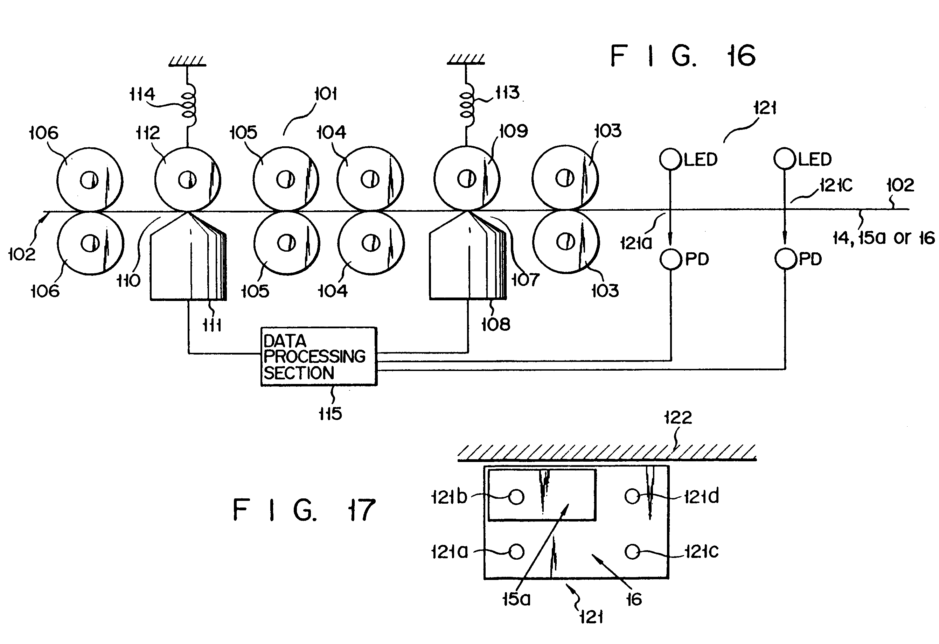

Fig. 15 shows an automatic ticket checking apparatus having a ticket size discriminating function. In Fig. 15, a size detector 121 is arranged at the inlet side of a transport path 102. As shown in Fig. 17, this detector 121 has four photointerrupters 121a to 121d, each of which has a photoemissive element (light emitting diode) LED and a photoelectric element (photodiode) PD arranged opposite to each otherwith the path 102 as a boundary.

When the pass 16 is conveyed to the detector 121 while being aligned by an aligning guide 122, all four photointerrupters 121a to 121d of the detector 121 simultaneously operate. At this time, the detector 121 detects the pass size. However, when the ticket 14 or 15a is conveyed to the detector 121, a plurality of photointerrupters do not operate simultaneously. In other words, in Fig. 17, the photointerrupter 121d initially operates, and the photointerrupter 121b then operates after the operation of the photointerrupter 121d is released. Accordingly, in the case of the ticket 14 or 15a, only one photointerrupter 121a a or 121 b operates at the same time. From this, the detector 121 detects the ticket size. When the detection signal of the detector 121 is inputted to a data processing section 115, the circuit 116 of the section 115 determines the pass size and ticket size.

The ticket or pass thus discriminated in size is conveyed to the device 107, the head 108 reads the information of the ticket or pass, and the information is transferred to the section 115. The section 115 determines whetherthe conveyed ticket or pass is a low or high coercive force ticket. The write mode is set in the circuit 119 based on the discriminated coercive force and size results. In other words, when the low coercive force ticket is discriminated by the pass size, the low coercive force recording mode is set for the pass, and when the high coercive force ticket is discriminated in the ticket size, the high coercive force recording mode is set for the ticket.

When the ticket or pass is conveyed to the device 110, the head 111 records information on the ticket or pass in response to the set recording mode. In other words, when the conveyed ticket is a low coercive force ticket, the elements WH4 and WH5 in Fig. 15 are set to the low coercive force exciting state. When the conveyed ticket is a high coercive force ticket, i.e., a mulitple trip ticket, the elements WH1 to WH3 are set to a high coercive force exciting state. Since the high coercive force ticket and low coercive force ticket, i.e., one-way tickets do not need data writing, the device 110 is not operated.

In the case of the embodiment in Fig. 16, central head elements WH4 and WH5 of the write head 111 may be composed of low coercive force magnetic heads, and side head elements WH6 and WH8 may be composed of high coercive force magnetic heads. In this case, the circuit 119 does not necessitate the exciting current switching circuit or coil switching circuit. Accordingly, the circuit 119 may be constructed with a simple circuit.

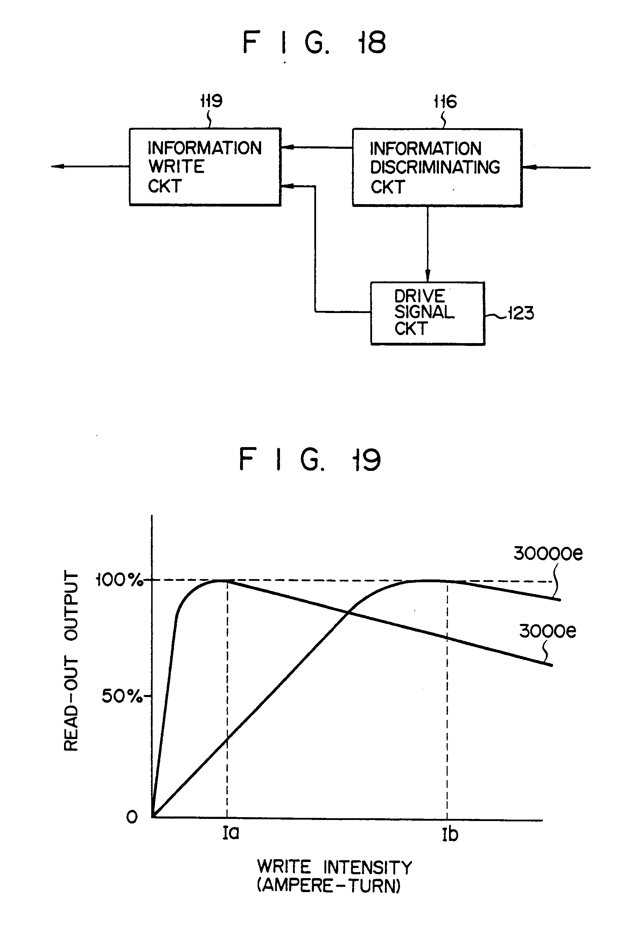

In the embodiments described above, information is recorded on the low coercive force ticket with low coercive force, and is recorded on the high coercive force ticket with high coercive force. In an embodiment in Fig. 18, when information is recorded on the tickets, it is recorded with the coercive force of the ticket having the maximum coercive force among the tickets having different coercive forces. The low coercive force of the ticket and pass is 300 Oe, and the high coercive force is 3,000 Oe. In the embodiment described above, information is rewritten with a high coercive force of 3,000 Oe in all the low coercive force tickets and passes, and the high coercive force ticket and pass are written with the same high coercive force. In other words, when information to be read is inputted to the circuit 116 in Fig. 18, the circuit 116 transfers the coercive force data to a drive signal circuit 123. The circuit 123 outputs a high coercive force write mode signal to the circuit 119 in response to the coercive force data. An information write circuit shown in Fig. 5 is, for example, provided in the circuit 119, and a high coercive force write mode signal, i.e., a low level signal is supplied to the transistor Tr3 of this write circuit. Accordingly, an exciting current of high level flows to the head 111 in accordance with the write data, and the head 111 generates a strong write magnetic field. The information of the low coercive force ticket or pass is rewritten by this strong magnetic field. Further, even if the conveyed ticket or pass has a high coercive force, the information is similarly rewritten by the strong magnetic field. When the low coercive force ticket is written with the same magnetic field as the high coercive force ticket, the read-out output is slightly lowered. The graph in Fig. 19 shows this state. In this graph, the ordinate axis indicates the read-out output, and the abscissa axis indicates the write intensity (ampere-turn). However, the 100% mark indicates the read-out output at the optimum write magnetic field intensity. The write intensity of the abscissa axis corresponds to the variation in the write current. According to this graph, when the exciting current is increased to magnetize both the low coercive force recording medium of 300 Oe and the high coercive force recording medium of 3,000 Oe, the magnetic flux (read-out output) of either recording medium increases with the increase of the exciting current (write current), and is saturated at a predetermined point. The exciting currents la, Ib at the saturation point are much larger for the high coercive force recording medium than for the low coercive force recording medium. When the exciting current exceeds the saturation point the read-out output decreases. This occurs because the residual magnetic flux of the write information is weakened by the leakage magnetic flux from the portion displaced from the gap of the magnetic head at the writing time, i.e., so-called "recording demagnetization".

When the information is written on the low coercive force recording medium with a strong magnetic field as described above, the read-out output decreases. Since the slice level, i.e., readable level of the read-out signal at the reading time is set from 60% to 70% of the ordinary standard output in the present automatic ticket checking apparatus, the above decrease in the read-out output causes no serious problem in practical use.

According to the present invention as described above, a magnetic read-write device which can commonly read and write information on magnetic media of different coercive forces is provided. Therefore, the operating efficiency of the apparatus can be improved.

It is preferred to construct the information read device so as to generate the read-out output at a constant level irrespective of the read-out output from the low or high coercive force ticket. The recording medium is not limited to a magnetic medium of 300 Oe or 3,000 Oe, and a magnetic medium which has a coercive force of 600 Oe, 1,200 Oe, .. or more may be used.

## Claims

1. A magnetic write device comprising:
means (70, 101) for sequentially transferring first and second magnetic recording media (14, 15a, 16),
discriminating means for discriminating first and second coercive forces on the recording media,
means for deriving corresponding information from the recording media,
means (119) for writing information on said first and second magnetic recording media (14, 15a, 16) with adapted coercive forces,
said first and second magnetic recording media (14, 15a, 16) have first and second coercive forces, respectively, the first coercive force differing from the second coercive force; and
said writing means (119) write information on said first and second recording media (14, 15a, 16) with the first and second coercive forces, respec- tively, in accordance with the discriminated result of said coercive force discriminating means, characterized in that
said discriminating means include detecting means (121) for detecting the size of said mag- netic recording media and outputting a size detec- tion signal corresponding to the size, and means (115) for discriminating the first and second coer- cive forces from the size detection signal of said size detecting means (121).

2. The magnetic write device according to claim 1, 1, characterized in that said size detecting means comprises a plurality of photointerrupters (121a to 121d) arranged laterally and longitudinally on the path of said recording media.

3. The magnetic write device according to claim 1, characterized in that said information writing means comprises magnetic head means (111) having a low coercive force medium magnetic head element and a high coercive force medium magnetic head element driven in accordance with the discriminated result of said discriminating means.

4. The magnetic write device according to claim 1, characterized in that said information writing means sets the intensity of said recording media to the intensity of a recording magnetic field corresponding to the high coercive force of the amplitudes of the coercive forces discriminated by said discriminating means.

## Patentansprüche

1. Magnetische Schreibeinrichtung mit:
einer Vorrichtung (70, 101) zum sequentiellen Übertragen erster und zweiter magnetischer Aufzeichnungsmedien (14, 15a, 16),
einer Diskriminiervorrichtung zum Diskriminieren bzw. Unterscheiden erster und zweiter Koerzitivkräfte auf den Aufzeichnungsmedien,
einer Vorrichtung zum Ableiten entsprechender Information von den Aufzeichnungsmedien,
einer Schreibvorrichtung (119) zum Schreiben von Information auf die ersten und zweiten Magnetaufzeichnungsmedien (14, 15a, 16) mit angepaßten Koerzitivkräften, wobei:
die ersten und zweiten Magnetaufzeichnungsmedien (14, 15a, 16) erste bzw. zweite Koerzitivkräfte haben und die erste Koerzitivkraft von der zweiten Koerzitivkraft abweicht, und
die Schreibvorrichtung (119) Information auf die ersten und zweiten Aufzeichnungsmedien (14, 15a, 16) mit der ersten bzw. zweiten Koerzitivkraft gemäß dem unterschiedenen Ergebnis der Koerzitivkraft-Unterscheidungsvorrichtung schreibt,
dadurch gekennzeichnet, daß
die Diskriminiervorrichtung eine Detektorvorrichtung (121) zum Erfassen der Abmessung bzw. Größe der Magnetaufzeichnungsmedien und zum Ausgeben eines der Abmessung entsprechenden Abmessungsdetektorsignales und eine Diskriminiervorrichtung (115) zum Unterscheiden der ersten und zweiten Koerzitivkräfte vom Abmessungsdetektorsignal von der Detektorvorrichtung (121) hat.

2. Magnetische Schreibeinrichtung nach Anspruch 1, dadurch gekennzeichnet, daß die Abmessungsdetektorvorrichtung eine Vielzahl von Photounterbrechern (121a - 121d) aufweist, die seitlich und längs der Strecke derAufzeichnungsmedien angeordnet sind.

3. Magnetische Schreibeinrichtung nach Anspruch 1, dadurch gekennzeichnet, daß die Informationsschreibvorrichtung eine Magnetkopfvorrichtung (111) mit einem Niederkoerzitivkraftmedium-Magnetkopfelement und einem Hochkoerzitivkraftmedium-Magnetkopfelement, die gemäß dem unterschiedenen Ergebnis der Diskriminiervorrichtung angesteuert sind, aufweist.

4. Magnetische Schreibeinrichtung nach Anspruch 1, dadurch gekennzeichnet, daß die Informationsschreibvorrichtung die Stärke der Aufzeichnungsmedien auf die Stärke eines Aufzeichnungsmagnetfeldes entsprechend der hohen Koerzitivkraft der Amplituden der durch die Diskriminiervorrichtung unterschiedenen Koerzitivkräfte einstellt.

## Revendications

1. Dispositif d'écriture magnétique, comprenant :
- un dispositif (70, 101) destiné à transférer successivement un premier et un second support d'enregistrement magnétique (14, 15a, 16),
- un dispositif destiné à distinguer un premier et un second champ coercitif sur les supports d'enregistrement,
- un dispositif destiné à obtenir des informations correspondantes de la part des supports d'enregistrement,
- un dispositif (119) d'écriture d'informations sur le premier et le second support d'enregistrement magnétique (14, 15a, 16) avec des champs coercitifs adaptés,
- le premier et le second support d'enregistrement magnétique (14, 15a, 16) ont un premier et un second champ coercitif respectivement, le premier champ coercitif différant du second, et
- le dispositif d'écriture (119) écrit des informations sur le premier et le second support d'enregistrement (14, 15a, 16) avec le premier et le second champ coercitif respectivement, d'après le résultat déterminé par le dispositif destiné à distinguer les champs coercitifs,
caractérisé en ce que :
- le dispositif destiné à distinguer comprend un dispositif (121) de détection de la dimension des supports d'enregistrement magnétique et à transmettre un signal de détection de dimension qui correspond à leur dimension, et un dispositif (115) destiné à déterminer le premier et le second champ coercitif d'après le signal de détection de dimension provenant du dispositif de détection de dimension (121).

2. Dispositif d'écriture magnétique selon la revendication 1, caractérisé en ce que le dispositif de détection de dimension comprend plusieurs interrupteurs photoélectriques (121a à 121d) disposés latéralement et longitudinalement par rapport au trajet des supports d'enregistrement.

3. Dispositif d'écriture magnétique selon la revendication 1, caractérisé en ce que le dispositif d'écriture d'informations comporte un dispositif à tête magnétique (111) ayant un élément de tête magnétique pour support à faible champ coercitif et un élément de tête magnétique pour support à champ coercitif élevé, pilotés d'après le résultat donné par le dispositif destiné à distinguer.

4. Dispositif d'écriture magnétique selon la revendication 1, caractérisé en ce que le dispositif d'écriture d'informations fixe l'intensité des supports d'enregistrement à l'intensité du champ magnétique d'enregistrement correspondant au champ coercitif élevé parmi les amplitudes des champs coercitifs déterminés par le dispositif destiné à distinguer.
